(19) Europäisches Patentamt
European Patent Office
Office européen des brevets

(11) **EP 4 329 179 A1**

(12) **EUROPEAN PATENT APPLICATION**
published in accordance with Art. 153(4) EPC

(43) Date of publication:
**28.02.2024 Bulletin 2024/09**

(21) Application number: **21937928.6**

(22) Date of filing: **23.04.2021**

(51) International Patent Classification (IPC):
**H02M 7/48** (2007.01)   **H02M 7/537** (2006.01)

(52) Cooperative Patent Classification (CPC):
**H02M 7/48; H02M 7/537**

(86) International application number:
**PCT/JP2021/016443**

(87) International publication number:
**WO 2022/224437 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **ITOGAWA, Yuki
Tokyo 100-8310 (JP)**
• **KAWAI, Yu
Tokyo 100-8310 (JP)**
• **AMIMOTO, Takeshi
Tokyo 100-8310 (JP)**

(74) Representative: **Meissner Bolte Partnerschaft
mbB
Patentanwälte Rechtsanwälte
Postfach 86 06 24
81633 München (DE)**

(54) **POWER CONVERSION DEVICE AND METHOD OF CONTROLLING POWER CONVERSION DEVICE**

(57)    Adders (52, 54) output an upper limit (Iup) and a lower limit (Ilw) of a hysteresis band, using a hysteresis width (BW) set in accordance with a target value (ftrg) of switching frequency and current command value (ia*). A hysteresis comparator (60) outputs a result of comparison of reactor current (ia) with the upper limit (Iupc) and the lower limit (Ilwc) after dead time compensation by dead time compensation units (72, 74). A dead time generator (70) generates a gate signal (S1a, S1b) of a switching element such that a dead time is given, based on an output signal of the hysteresis comparator (60). The dead time compensation units (72, 74) add a compensation amount with a different polarity to a different one of the upper limit (Iup) and the lower limit (Ilw) between when the reactor current (ia) is positive and when it is negative.

FIG.7

EP 4 329 179 A1

**Description**

TECHNICAL FIELD

The present invention relates to a power conversion device and a method of controlling a power conversion device.

BACKGROUND ART

As a technique for power conversion devices, hysteresis control is known in which a semiconductor switching element (hereinafter also simply referred to as "switching element") is turned on/off based on a comparison between current or voltage as a control target and a threshold value.

For example, Japanese Patent Application Laid-Open JP 2005-341712 A (PTL 1) describes current hysteresis control in which the timing of on/off of a switching element is determined by comparing one of first and second threshold values with a signal corresponding to inductor current. In the current hysteresis control in PTL 1, the first and second threshold values are set to have a center value based on an output voltage, and a width corresponding to a target value of switching frequency. It is also described that the width of hysteresis band equivalent to the difference between the first and second thresholds is changed so that the switching frequency is controlled to a target value.

CITATION LIST

PATENT LITERATURE

PTL 1: Japanese Patent Application Laid-Open JP 2005-341712 A

SUMMARY OF THE INVENTION

TECHNICAL PROBLEM

The hysteresis control in PTL 1 is applied to a power conversion device configured with single switching. On the other hand, in a power conversion device having a plurality of switching elements connected in series between two lines to form a leg, it is common to provide a period called dead time in which two semiconductor switching elements of the same leg are both turned off when they are alternately turned on/off.

In a power semiconductor device having a leg, since the dead time period may influence circuit behavior, there is a concern that when the current hysteresis control described in PTL 1 is simply applied, it is difficult to control the switching frequency to a target value.

The present invention has been made to solve such a problem and an object of the present invention is to provide hysteresis control for a power conversion device in which the switching frequency can be controlled to a target value stably even when the dead time is provided.

SOLUTION TO THE PROBLEM

According to an aspect of the present invention, a power conversion device is provided. The power conversion device includes a power conversion circuit and a control circuit. The power conversion circuit includes first and second switching elements connected in series between first and second lines. The control circuit controls on/off of the first and second switching elements by hysteresis control based on a comparison of a detection value of an electrical quantity treated in power conversion by the power conversion circuit with an upper limit and a lower limit of a hysteresis band encompassing a command value of the electrical quantity. On/off of the first and second switching elements is controlled such that a dead time is provided in which both of the first and second switching elements are turned off when on/off is switched. The control circuit includes a hysteresis band generation unit, an upper/lower limit setting unit, a dead time compensation unit, a hysteresis comparator, and a dead time generator. The upper/lower limit setting unit sets the upper limit and the lower limit in accordance with the hysteresis bandwidth and the command value. The dead time compensation unit adds, to the upper limit and the lower limit set by the upper/lower limit setting unit, a compensation amount for preventing the detection value from falling outside the hysteresis band during the dead time. The hysteresis comparator compares the detection value with the upper limit and the lower limit after processing by the dead time compensation unit. The dead time generator generates a control signal for on/off of the first and second switching elements such that the dead time is given, based on an output signal of the hysteresis comparator. The dead time compensation unit performs a process of adding the compensation amount with a different polarity to a different one of the upper limit and the lower limit between when the detection value is positive and when the detection value is negative.

According to another aspect of the present invention, a method of controlling a power conversion device is provided. The power conversion device includes a power conversion circuit having first and second switching elements connected in series between first and second lines, in which on/off of the first and second switching elements is controlled such that a dead time is provided in which both of the first and second switching elements are turned off when on/off is switched. The method includes a step of controlling on/off of the first and second switching elements by hysteresis control based on a comparison of a detection value of an electrical quantity treated in power conversion by the power conversion circuit with an upper limit and a lower limit of a hysteresis band encompassing a command value of the electrical quantity. The step of controlling includes steps of: generating a hysteresis bandwidth in the hysteresis control, in accordance with a target value of switching frequency of the first and second switching elements; setting the upper limit and the lower limit in accordance with the hysteresis bandwidth and the command value; performing dead time compensation of adding, to the set upper limit and lower limit, a compensation amount for preventing the detection value from falling outside the hysteresis band during the dead time; operating a hysteresis comparator such that the detection value is compared with the upper limit and the lower limit after the dead time compensation; and generating a control signal for on/off of the first and second switching elements such that the dead time is given, based on an output signal of the hysteresis comparator. In the dead time compensation, the compensation amount with a different polarity is added to a different one of the upper limit and the lower limit between when the detection value is positive and when the detection value is negative.

## ADVANTAGEOUS EFFECTS OF THE INVENTION

According to the present invention, the positive or negative compensation amount is selectively added to one of the upper limit and the lower limit of the hysteresis band set in accordance with a target value of switching frequency, depending on the polarity of a detection value as a control target, whereby the detection value is prevented from falling outside the hysteresis band due to change in detection value during a dead time period, thereby achieving hysteresis control capable of controlling the switching frequency to a target value stably while eliminating the influence of the dead time.

## BRIEF DESCRIPTION OF THE DRAWINGS

FIG. 1 is a schematic configuration diagram of a power conversion device according to a first embodiment.
FIG. 2 is a functional block diagram illustrating hysteresis control according to a comparative example.
FIG. 3 is an exemplary waveform diagram of reactor current under the hysteresis control in FIG. 2.
FIG. 4 is a functional block diagram illustrating hysteresis control having a dead time-giving function.
FIG. 5 is a signal waveform diagram for explaining the operation of a dead time generator shown in FIG. 4.
FIG. 6 is a waveform diagram of reactor current for explaining the influence of dead time on hysteresis control.
FIG. 7 is a functional block diagram illustrating hysteresis control according to the first embodiment.
FIG. 8 is a first control waveform example of reactor current for explaining hysteresis control according to the first embodiment.
FIG. 9 is a second control waveform example of reactor current for explaining hysteresis control according to the first embodiment.
FIG. 10 is a flowchart illustrating a process of setting upper and lower limits of hysteresis control according to the first embodiment.
FIG. 11 is a functional block diagram illustrating hysteresis control according to a modification of the first embodiment.
FIG. 12 is a flowchart illustrating a process of hysteresis control according to a modification of the first embodiment.
FIG. 13 is a schematic configuration diagram of a power conversion device according to a second embodiment.
FIG. 14 is a functional block diagram illustrating hysteresis control according to the second embodiment.
FIG. 15 is a functional block diagram illustrating a configuration example of a neutral point voltage computation unit shown in FIG. 14.
FIG. 16 is a conceptual waveform diagram for explaining the operation of a leg voltage calculation unit shown in FIG. 15.
FIG. 17 is a flowchart illustrating a current comparison process in hysteresis control according to the second embodiment.

DESCRIPTION OF EMBODIMENTS

Embodiments of the present invention will be described in detail below with reference to the drawings. In the following, like or corresponding parts in the drawings are denoted by like reference signs and a description thereof will basically not be repeated. The configuration of each embodiment described below is not necessarily applied alone but may be combined with the configuration of another embodiment without leading to contradiction.

First Embodiment

(Circuit Configuration Example)

First of all, a configuration example of a power conversion device according to a first embodiment will be described.

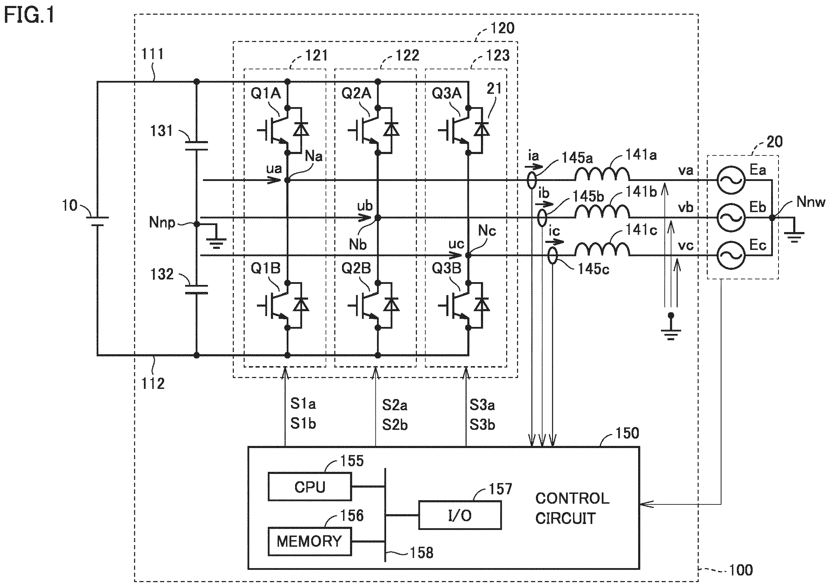

FIG. 1 shows a schematic configuration diagram of a power conversion device 100 according to the present first embodiment. Power conversion device 100 is connected between a DC power source 10 and an AC power source 20 and performs power transmission between DC power source 10 and AC power source 20. In the example in FIG. 1, AC power source 20 is configured with three phase alternating current and has a neutral point Nnw grounded.

Power conversion device 100 includes DC link capacitors 131 and 132 having equivalent capacitance values, a three-phase inverter circuit 120, current control reactors 141a to 141c having equivalent inductance values, and a control circuit 150. Three-phase inverter circuit 120 performs power conversion (DC/AC conversion) between DC power source 10 and AC power source 20.

Three-phase inverter circuit 120 includes a first leg 121 to a third leg 123 of three phases connected in parallel between a positive electrode line 111 and a negative electrode line 112. First leg 121 has switching elements Q1A and Q1B connected in series between positive electrode line 111 and negative electrode line 112. Second leg 122 has switching elements Q2A and Q2B connected in series between positive electrode line 111 and negative electrode line 112. Similarly, third leg 123 has switching elements Q3A and Q3B connected in series between positive electrode line 111 and negative electrode line 112.

In other words, first leg 121 is a series connection circuit of switching element Q1A on the positive electrode side and switching element Q1B on the negative electrode side. Second leg 122 is a series connection circuit of switching element Q2A on the positive electrode side and switching element Q2B on the negative electrode side. Third leg 123 is a series connection circuit of switching element Q3A on the positive electrode side and switching element Q3B on the negative electrode side. Each of the switching elements on the positive electrode side and the negative electrode side of first leg 121 to third leg 123 may be configured with a plurality of switching elements.

For each of switching elements Q1A, Q1B, Q2A, Q2B, Q3A, and Q3B, a semiconductor element controllable in on/off timing, such as an insulated gate bipolar transistor (IGBT) or a metal oxide semiconductor field effect transistor (MOSFET), can be used. A diode 21 (hereinafter referred to as anti-parallel diode 21) is connected in anti-parallel with each of switching elements Q1A, Q1B, Q2A, Q2B, Q3A, and Q3B. Each of switching elements Q1A to Q3A on the positive electrode side corresponds to an example of "first switching element", and each of switching elements Q1B to Q3B on the negative electrode side corresponds to an example of "second switching element".

Positive electrode line 111 and negative electrode line 112 are respectively connected to the positive electrode and the negative electrode of DC power source 10. DC link capacitors 131 and 132 are connected in parallel with DC power source 10 and connected in series between positive electrode line 111 and negative electrode line 112. In the example in FIG. 1, a neutral point Nnp of DC power source 10, which is a connection point between DC link capacitors 131 and 132, is grounded in the same manner as neutral point Nnw of AC power source 20. In other words, in the example in FIG. 1, both of neutral point Nnp and neutral point Nnw are grounded and have the same potential.

An intermediate point Na of first leg 121, that is, the connection point between switching elements Q1A and Q1B is connected to one terminal of current control reactor 141a. Similarly, an intermediate point Nb of second leg 122, that is, the connection point between switching elements Q2A and Q2B is connected to one terminal of current control reactor 141b, and an intermediate point Nc of third leg 123, that is, the connection point between switching elements Q3A and Q3B is connected to one terminal of current control reactor 141c. Hereinafter, the potentials to ground of intermediate points Na to Nc are referred to as voltages ua to uc.

The other terminals of current control reactors 141a to 141c are connected to the corresponding phases of AC power source 20. AC power source 20 mainly operates as a voltage source having AC voltage sources Ea to Ec of a phase to c phase, and power transmission between DC power source 10 and AC power source 20 is implemented by power conversion by three-phase inverter circuit 120.

Current sensors 145a to 145c are provided corresponding to current control reactors 141a to 141c, respectively, to detect reactor currents ia to ic of the corresponding phases passing through current control reactors 141a to 141c and flowing into AC power source 20. Further, voltage sensors (not shown) are disposed for AC power source 20 to detect voltages (AC) va to vc output to the corresponding phases. Voltages va to vc can be detected, for example, by disposing voltage sensors (not shown) for detecting a potential to ground, but detection values of voltage sensors (not shown) for detecting a line-to-line voltage may be converted into voltages va to vc indicating potentials to ground in control circuit 150.

The detection values by sensors including the above current sensors 145a to 145c and not-shown voltage sensors are input to control circuit 150. Control circuit 150 outputs a gate signal for controlling the on/off of each of switching elements Q1A, Q1B, Q2A, Q2B, Q3A, and Q3B, based on the input sensor detection value. The power conversion by three-phase inverter circuit 120 is thus controlled.

FIG. 1 shows a hardware configuration example of control circuit 150. For example, as shown in FIG. 1, control circuit 150 has a computer-based configuration including a central processing unit (CPU) 155, a memory 156, and an input/output (I/O) circuit 157. CPU 155, memory 156, and I/O circuit 157 can exchange data with each other via a bus 158. A program is stored in advance in a partial area of memory 156, and CPU 155 executes the program to perform hysteresis control described later. I/O circuit 157 receives/outputs a signal and data from/to the outside of control circuit 150 (for example, three-phase inverter circuit 120 and a sensor group including current sensors 145a to 145c).

Alternatively, unlike the example in FIG. 1, at least a part of control circuit 150 may be configured using a digital electronic circuit such as a field programmable gate array (FPGA) or an application specific integrated circuit (ASIC). Further, at least a part of control circuit 150 may be configured with an analog electronic circuit including a comparator, an operational amplifier, a differential amplifier circuit, and the like. It is assumed that the function of a block that configures each of a plurality of hysteresis control units described later is implemented by at least one of software processing and hardware processing by control circuit 150.

(Comparative Example of Hysteresis Control)

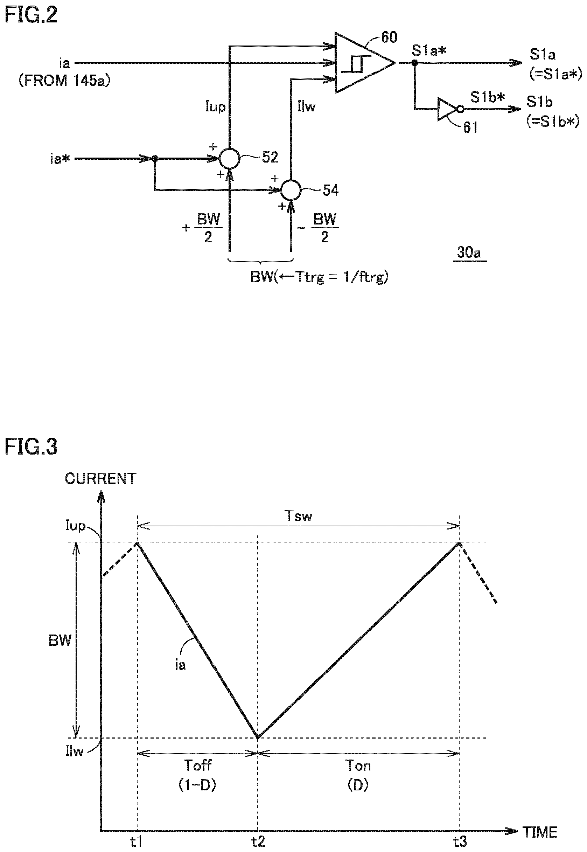

The hysteresis control performed by control circuit 150 will now be described. First, referring to FIG. 2 to FIG. 6, hysteresis control according to a comparative example that does not consider a dead time will be described.

In the present description below, hysteresis control for controlling the on/off of switching elements Q1A and Q1B that constitute first leg 121 based on reactor current ia, among first leg 121 to third leg 123, will be explained representatively. However, for each hysteresis control explained below, hysteresis control for controlling the on/off of switching elements Q2A, Q2B and switching elements Q3A, Q3B can be performed similarly, based on reactor currents ib and ic in second leg 122 and third leg 123, respectively.

FIG. 2 shows a functional block diagram illustrating hysteresis control according to a comparative example.

A hysteresis control unit 30a according to a comparative example includes adders 52 and 54, a hysteresis comparator 60, and an inverter 61.

Here, a hysteresis bandwidth BW is a setting value for controlling a switching period to a target value Ttrg (Ttrg=1/ftrg) in accordance with a target value ftrg of switching frequency and can be set by any method. Adders 52 and 54 receive +(BW/2) and -(BW/2), respectively.

Adder 52 adds a current command value ia* of reactor current ia and (BW/2) to calculate an upper limit Iup of the hysteresis band. Adder 54 adds current command value ia* and -(BW/2) to calculate a lower limit Ilw of the hysteresis band. For example, current command value ia* is sinusoidal current having the same frequency as three-phase AC voltage of AC power source 20.

Hysteresis comparator 60 outputs a pulse signal having logic high level (hereinafter "H level") or logic low level ("L level") indicating a result of comparison of reactor current ia (detection value) detected by current sensor 145a with upper limit Iup and lower limit Ilw of the hysteresis band. An output signal S1a* of hysteresis comparator 60 is used as it is as a gate signal S1a of switching element Q1A on the positive electrode side.

Inverter 61 inverts an output signal of hysteresis comparator 60. S1b* which is inversion of output signal S1a* is used as a gate signal S1b of switching element Q1B on the negative electrode side. In an H level period of each gate signal, the corresponding switching element is turned on, and in an L level period, the corresponding switching element is turned off. Gate signals S1a, S1b in FIG. 2 are gate signals for theoretical on/off control with no dead time given. In first leg 121, switching element Q1A on the positive electrode side and switching element Q1B on the negative electrode side are complementarily turned on/off in response to gate signals S1a, S1b using S1a* and S1b* as they are.

FIG. 3 shows an exemplary waveform diagram of reactor current under the hysteresis control in FIG. 2. Here, it is assumed that an output voltage of three-phase inverter circuit 120, that is, a voltage of DC power source 10 is sufficiently high relative to voltage va of AC power source 20, and a potential (E/2) of positive electrode line 111 exceeds a potential of a phase of AC power source 20. Here, as shown in FIG. 3, reactor current ia rises in the ON period of switching element Q1A on the positive electrode side. On the other hand, the reactor current lowers in the ON period of switching element Q1B on the negative electrode side (OFF period of switching element Q1A).

In hysteresis control, every time reactor current ia rises to upper limit Iup or lowers to lower limit Ilw, an output signal of hysteresis comparator 60 changes, whereby the ON periods of switching element Q1A on the positive electrode side and switching element Q1B on the negative electrode side are alternately provided, and the direction of change of reactor current ia is inverted.

Before time t1, which is the ON period of switching element Q1A on the positive electrode side, the rising reactor current ia is compared with upper limit Iup, and while ia<Iup, an output signal of hysteresis comparator 60 is kept at H level.

At time t1, when ia≥Iup, an output signal of hysteresis comparator 60 changes from H level to L level. Then, switching element Q1A on the positive electrode side is turned off, and switching element Q1B on the negative electrode side is turned on, so that reactor current ia turns to lowering.

After time t2 in which reactor current ia lowers, reactor current ia is compared with lower limit Ilw, and while ia>Ilw, an output signal of hysteresis comparator 60 is kept at L level. At time t2, when ia≤Ilw, an output signal of hysteresis comparator 60 changes from L level to H level. Then, switching element Q1B on the negative electrode side is turned off, and switching element Q1A on the positive electrode side is turned on, so that reactor current ia turns to rising.

At time t3, when the rising reactor current ia reaches upper limit Iup again, an output signal of hysteresis comparator 60 changes from H level to L level, so that an ON period of switching element Q1B on the negative electrode side is provided.

Each of ON period length Ton and OFF period length Toff of the switching element on the positive electrode side under hysteresis control is determined by the inclination (change rate) of reactor current ia and hysteresis bandwidth BW. Therefore, it is understood that a switching period Tsw (Tsw=Ton+Toff) can be controlled to target value Ttrg by controlling hysteresis bandwidth BW appropriately.

In the following, the ratio of ON period length Ton of switching element Q1A to switching period Tsw is defined as duty D. The ratio of OFF period of switching element Q1A (that is, ON period of switching element Q1B) OFF period length Toff to switching period Tsw is given by (1-D).

(Influence of Dead Time on Hysteresis Control)

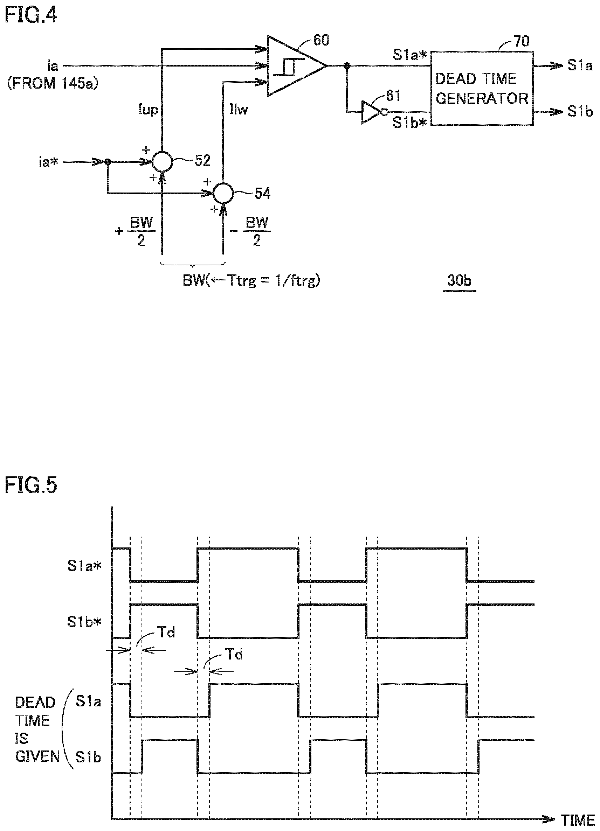

FIG. 4 shows a functional block diagram of hysteresis control having a dead time-giving function.

A hysteresis control unit 30b shown in FIG. 4 differs from the configuration of hysteresis control unit 30a shown in FIG. 2 in that it further includes a dead time generator 70. Dead time generator 70 receives output signals S1a*, S1b* of hysteresis comparator 60 and inverter 61 and generates gate signals S1a, S1b with a dead time given.

FIG. 5 shows a signal waveform diagram for explaining the operation of dead time generator 70.

As shown in FIG. 5, output signal S1a* of hysteresis comparator 60 and its inversion signal S1b* are alternately set to one of H level and L level.

As shown in FIG. 1, when both of the switching elements on the positive electrode side and the sub electrode side of the same leg are turned on, a short-circuit path is formed between positive electrode line 111 and negative electrode line 112, that is, an arm short-circuit occurs. Therefore, it is known to provide a dead time in which an OFF command is generated for both of the switching elements on the positive electrode side and the sub electrode side so that an arm short-circuit due to a minute deviation of ON timing and OFF timing does not occur between the switching elements on the positive electrode side and the sub electrode side.

When the on/off of the switching elements on the positive electrode side and the negative electrode side is switched, dead time generator 70 generates a turn-off command at a timing as it is and gives a predetermined delay time Td to a turn-on command. Thus, a dead time can be provided in which both of gate signals S1a and S1b are set to L level, that is, an OFF command is applied to both of the switching elements on the positive electrode side and the sub electrode side. Hereinafter the period length of dead time is also simply referred to as dead time Td.

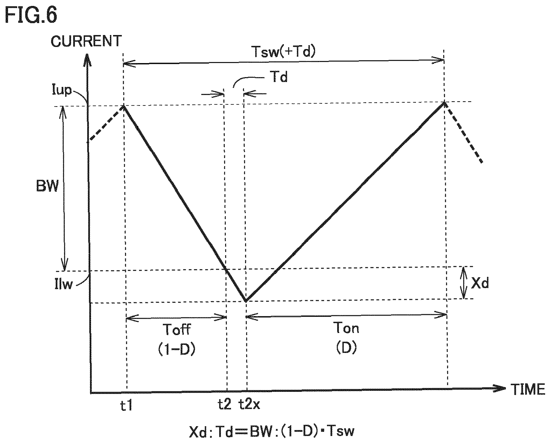

FIG. 6 shows an exemplary waveform diagram of reactor current for explaining the influence of dead time on hysteresis control. FIG. 6 shows an exemplary waveform of reactor current in a case where hysteresis control is performed using upper limit Iup and lower limit Ilw set without considering a dead time, using gate signals S1a, S1b in FIG. 4.

As shown in FIG. 6, in an OFF period of switching element Q1A on the positive electrode side, when reactor current ia lowers to lower limit Ilw at time t2, in response, output signal S1a* of hysteresis comparator 60 changes to H level in order to raise reactor current ia.

However, as explained in FIG. 5, gate signal S1a is kept at L level until dead time Td elapses since time t2. In the dead time period, therefore, reactor current ia continues lowering. Then, at time t2x after the elapse of dead time Td, gate signal S1a changes from L level to H level, so that reactor current ia turns to rising.

Therefore, the time length taken for reactor current ia to reach upper limit Iup increases, compared to the time length of time t2 to t3 in FIG. 3, by the amount corresponding to the current change amount Xd from time t2 to time t2x. Thus, it is understood that in the actual switching period Tsw under hysteresis control, an error due to the influence of the dead time occurs relative to target value Ttrg corresponding to hysteresis bandwidth BW.

(Hysteresis Control According to First Embodiment)

In the first embodiment, hysteresis control that compensates for the influence of dead time as described above will be described.

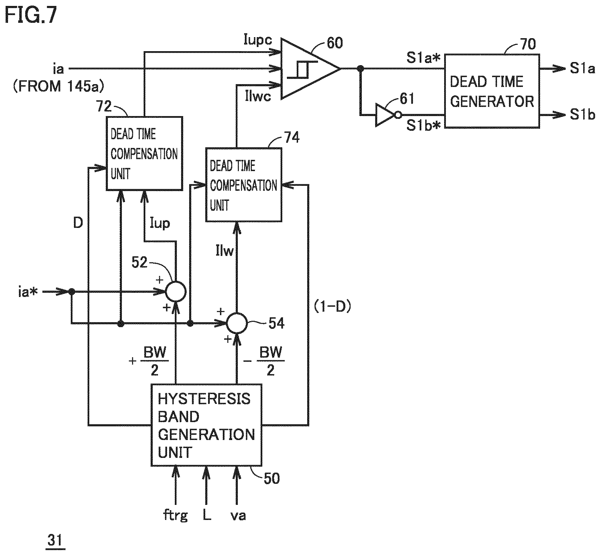

FIG. 7 is a functional block diagram illustrating hysteresis control according to the first embodiment.

A hysteresis control unit 31 according to the first embodiment includes a hysteresis band generation unit 50, adders 52 and 54, a hysteresis comparator 60, a dead time generator 70, and dead time compensation units 72 and 74. In other words, hysteresis control unit 31 differs from hysteresis control unit 30b shown in FIG. 4 in that it further includes hysteresis band generation unit 50 and dead time compensation units 72 and 74.

Hysteresis band generation unit 50 has the function of computing duties D, (1-D) for use in compensation computation in dead time compensation units 72, 74, in addition to the function of calculating hysteresis bandwidth BW for controlling the switching frequency to target value ftrg.

A calculation example of hysteresis bandwidth BW and duty D will now be described below.

The inclination (dia/dt) of reactor current ia shown in FIG. 3 can be determined by the following Equation (1), using inductance L of current control reactor 141a, voltage va, and voltage ua at the intermediate point of first leg 121.

$$(dia/dt) = (ua - va)/L \qquad \ldots(1)$$

In Equation (1), voltage ua is ua=(E/2) in the ON period of switching element Q1A on the positive electrode side and is ua=-(E/2) in the ON period of switching element Q1B on the negative electrode side.

Therefore, the ON period length Ton and the OFF period length Toff of switching element Q1A on the positive electrode side can be given by the following Equations (2) and (3).

$$Ton = BW \cdot L/(va + (E/2)) \qquad \ldots(2)$$

$$Toff = BW \cdot L/((E/2) - va) \qquad \ldots(3)$$

Therefore, switching period Tsw can be given by the following Equation (4).

$$Tsw = (BW \cdot L \cdot E)/((E/2)^2 - (va)^2) \qquad \ldots(4)$$

In Equation (4), Tsw=Ttrg=1/ftrg is substituted, and the equation is solved for hysteresis bandwidth BW, yielding Equation (5).

$$BW = Ttrg \cdot ((E/2)^2 - (va)^2)/(L \cdot E) \qquad \ldots(5)$$

Based on Equation (5), hysteresis bandwidth BW for controlling the switching frequency to target value ftrg is calculated under the inclination of reactor current ia at present. In other words, hysteresis band generation unit 50 calculates from a detection value of voltage va, voltage E (constant or detection value) of DC power source 10, and inductance L of current control reactor 141a, and target value ftrg of switching frequency.

Based on Equations (2) and (3), D=Ton/(Ton+Tff) and 1-D=Toff/(Ton+Toff) can be determined by the following Equation (6).

$$D = ((E/2) - va)/E \qquad \ldots(6)$$

$$1 - D = ((E/2) + va)/E \qquad \ldots(7)$$

Hysteresis band generation unit 50 inputs +(BW/2) to adder 52 and inputs -(BW/2) to adder 54, based on hysteresis bandwidth BW calculated by Equation (5).

Thus, upper limit Iup (Iup=ia*+(BW/2)) and lower limit Ilw (Ilw=ia*-(BW/2)) of the hysteresis band before dead time compensation are output from adders 52 and 54, in the same manner as in FIG. 2. In other words, it is understood that adders 52 and 54 correspond to an example of "upper/lower limit setting unit", and the hysteresis band defined by the upper limit Iup and lower limit Ilw encompasses current command value ia*. In the present embodiment, reactor current ia corresponds to an example of "electrical quantity" as a target of hysteresis control, and current command value ia* corresponds to an example of "command value" of the electrical quantity.

Dead time compensation unit 72 generates an upper limit Iupc after dead time compensation, based upper limit Iup (before dead time compensation) from adder 52, duty D generated by hysteresis band generation unit 50, and the polarity (positive/negative) of reactor current ia.

Dead time compensation unit 74 generates a lower limit Ilwc after dead time compensation, based lower limit Ilw (before dead time compensation) from adder 54, duty (1-D) generated by hysteresis band generation unit 50, and the polarity (positive/negative) of reactor current ia. In dead time compensation units 72, 72, the determination result of positive/negative can be stabilized by determining the polarity (positive/negative) of reactor current ia, using current command value ia*.

Hysteresis comparator 60 compares reactor current ia (detection value) detected by current sensor 145a with upper limit Iupc and lower limit Ilwc of the hysteresis band after processing by dead time compensation units 72, 74.

S1a* which is an output signal of hysteresis comparator 60 and its inversion signal S1b* are input to dead time generator 70, and dead time generator 70 outputs gate signals S1a, S1b with a dead time given, in the same manner as in FIG. 4. In other words, hysteresis control unit 31 in FIG. 7 generates gate signals S1a, S1b, in the same manner as hysteresis control unit 30b shown in FIG. 4, using upper limit Iupc and lower limit Ilwc of the hysteresis band after dead time compensation.

Referring to FIG. 6 again, the calculation of the dead time compensation amount by dead time compensation units 72, 74 will be described. FIG. 6 illustrates calculation of the compensation amount for lower limit Ilw for handling the influence of dead time.

As shown in FIG. 6, in the OFF period of switching element Q1A (the ON period of switching element Q1B), at time t2 at which reactor current ia lowers to lower limit Ilw, although an output signal (S1a*) of hysteresis comparator 60 changes from L level to H level, reactor current ia continues lowering until time t2x at which dead time Td elapses.

As a result, since the ON period of switching element Q1A for raising reactor current ia is not started, reactor current ia becomes lower than lower limit Ilw by Xd. In other words, a control error of reactor current ia relative to the lower limit of the hysteresis band occurs. In this way, when the behavior (rising/lowering) of reactor current differs between during dead time and after the end of dead time, a control error relative to the upper limit or the lower limit of the hysteresis band occurs.

Considering the control error here, since the inclination of reactor current ia is the same between time t1 to t2 and time t2 to t2x are the same, the proportional relation as indicated by the following Equation (8) holds between Xd and hysteresis bandwidth BW.

$$BW : Xd = Toff : Td \qquad \ldots (8)$$

In Equation (8), the ON period length of switching element Q1B immediately before dead time, that is, the OFF period length $Toff = (1-D) \cdot Tsw$ of switching element Q1A is substituted, and Equation (8) is solved for Xd, yielding the following Equation (9).

$$Xd = BW \cdot Td / (Tsw \cdot (1-D)) \qquad \ldots (9)$$

Therefore, in the example in FIG. 6, lower limit Ilwc=Ilw+Xd after dead time compensation can be set for lower limit Ilx, using Xd as the compensation amount. As a result, after the elapse of dead time Td since output signal (S1a*) of hysteresis comparator 60 changes from L level to H level based on the lower limit Ilwc after compensation, the lower limit of reactor current ia at a timing when gate signal S1a changes from L level to H level can be controlled to lower limit Ilw (before compensation) based on hysteresis bandwidth BW.

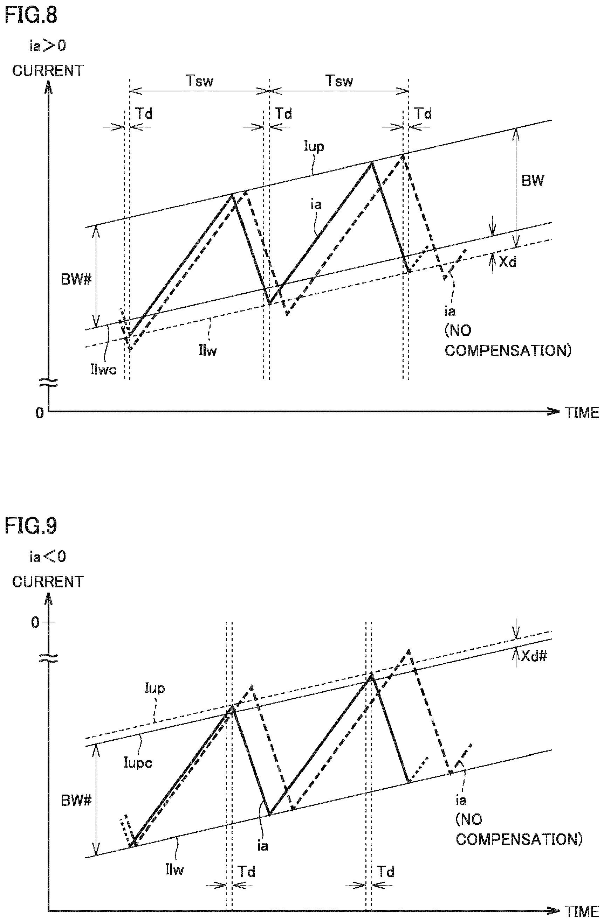

The dead time compensation corresponding to the polarity (positive/negative) of reactor current ia will now be described with reference to FIG. 8 and FIG. 9.

FIG. 8 shows a control waveform example of reactor current when reactor current ia is positive (ia>0).

When reactor current ia is positive, on the lower limit side of the hysteresis band, the behavior (rising/lowering) of reactor current ia differs between during dead time and in the ON period of switching element Q1A after the end of dead time. Thus, a control error (Xd) of reactor current ia as illustrated in FIG. 6 occurs during a dead time period. As a result, as indicated by the dotted line in FIG. 8, in the hysteresis control in accordance with upper limit Iup and lower limit Ilw before compensation, reactor current ia falls outside the hysteresis band on the lower limit side, during a dead time period.

Therefore, when it is determined that reactor current ia is positive based on current command value ia*, dead time compensation unit 74 adds compensation amount Xd having a positive value determined by Equation (9) to lower limit Ilw in accordance with hysteresis bandwidth BW calculated by hysteresis band generation unit 50 to generate lower limit Ilwc to be input to hysteresis comparator 60 (Ilwc=Ilw+Xd).

On the other hand, on the upper limit side of the hysteresis band, when both of switching elements Q1A and Q1B are turned off in dead time Td, reactor current ia decreases. In other words, the behavior of reactor current ia is the same between during dead time and in the OFF period of switching element Q1A (ON period of switching element Q 1B) after the end of dead time. Therefore, it is not necessary to compensate for upper limit Iup in accordance with hysteresis bandwidth BW calculated by hysteresis band generation unit 50.

Hence, when it is determined that reactor current ia is positive based on current command value ia*, dead time compensation unit 72 only needs to set upper limit Iup in accordance with hysteresis bandwidth BW calculated by hysteresis band generation unit 50, as it is, as upper limit Iupc to be input to hysteresis comparator 60. Therefore, for compensation amount Xd# on the upper limit side by dead time compensation unit 72, Iupc=Iup+Xd#=Iup is set with Xd#=0.

As a result, a substantial hysteresis bandwidth BW# after dead time compensation is narrower than hysteresis bandwidth BW calculated by hysteresis band generation unit 50 by the above compensation amount Xd (BW#=BW-Xd). Thus, as indicated by the solid line in FIG. 8, the hysteresis control using lower limit Ilwc compensated for to the rising side can prevent reactor current ia from falling outside the hysteresis band (hysteresis bandwidth BW) during a dead time period.

FIG. 9 shows a control waveform example of reactor current when reactor current ia is negative (ia<0).

When reactor current ia is negative, contrary to FIG. 8, reactor current ia rises during a dead time period. Hence, on the upper limit side of the hysteresis band, the behavior (rising/lowering) of reactor current ia differs between during dead time and in the OFF period of switching element Q1A after the end of dead time. Thus, a control error of reactor current ia occurs during a dead time period. As a result, as indicated by the dotted line in FIG. 9, in the hysteresis control in accordance with upper limit Iup and lower limit Ilw before compensation, reactor current ia falls outside the hysteresis band on the upper limit side, during a dead time period.

Therefore, when it is determined that reactor current ia is negative based on current command value ia*, dead time compensation unit 72 adds compensation amount Xd# having a negative value to upper limit Iup in accordance with hysteresis bandwidth BW calculated by hysteresis band generation unit 50 to generate upper limit Iupc to be input to hysteresis comparator 60 (Iupc=Iup+Xd#).

Compensation amount Xd# in this case can be determined by the following Equation (10) by replacing duty (1-D) by D in Equation (9).

$$Xd\#=-BW \cdot Td/(Tsw \cdot D) \qquad \ldots(10)$$

On the other hand, on the lower limit side of the hysteresis band, the behavior of reactor current ia is the same between during dead time and in the ON period of switching element Q1A after the end of dead time. Therefore, it is not necessary to compensate for lower limit Ilw in accordance with hysteresis bandwidth BW calculated by hysteresis band generation unit 50.

Hence, when it is determined that reactor current ia is negative based on current command value ia*, dead time compensation unit 74 only needs to set lower limit Ilw in accordance with hysteresis bandwidth BW calculated by hysteresis band generation unit 50, as it is, as lower limit Ilwc to be input to hysteresis comparator 60. Therefore, for compensation amount Xd on the lower limit side by dead time compensation unit 74, Ilwc=Ilw+Xd=Ilw is set with Xd=0.

As a result, a substantial hysteresis bandwidth BW# after dead time compensation is narrower than hysteresis bandwidth BW calculated by hysteresis band generation unit 50 by the above compensation amount Xd (BW#=BW-|Xd#|). Thus, as indicated by the solid line in FIG. 9, the hysteresis control using upper limit Iupc compensated for to the lowering side can prevent reactor current ia from falling outside the hysteresis band (hysteresis bandwidth BW) during a dead time period.

As understood from FIG. 8 and FIG. 9, compensation amount Xd (Xd>0) or Xd# (Xd#<0) is added to a different one of the upper limit and the lower limit, depending on the polarity (positive/negative) of reactor current ia. In other words, the polarity (positive/negative) of the compensation amount and to which of upper limit Iup and lower limit Ilw the compensation amount is added are different between when reactor current ia is positive and when it is negative.

It is also understood from Equations (9) and (10) that the absolute value of compensation amount Xd, Xd# is proportional to duty D, (1-D), more specifically, proportional to the ratio of dead time Td to the ON period length of switching element Q1A or Q1B immediately before dead time Td.

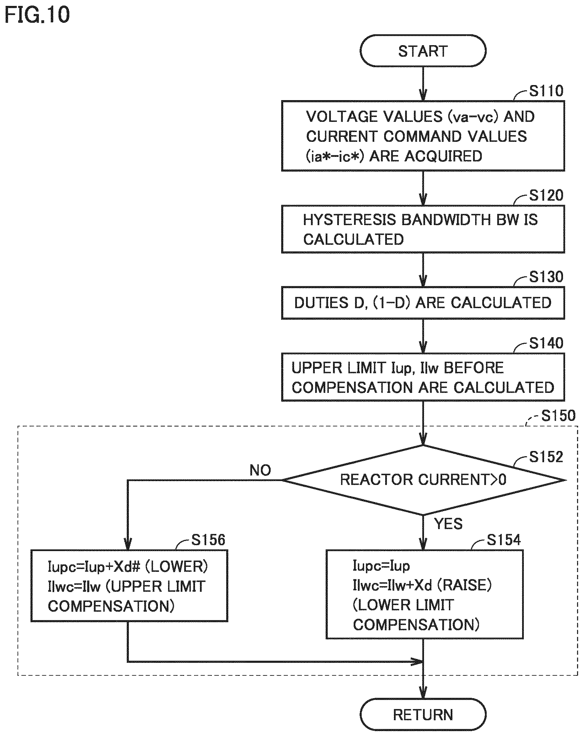

FIG. 10 shows a flowchart illustrating a process of setting upper and lower limits of hysteresis control according to the first embodiment. The control process in FIG. 10 is repeatedly performed periodically by control circuit 150.

At step (hereinafter simply referred to as "S") 110, control circuit 150 acquires voltages va to vc from sensor outputs and acquires current command values ia* to ic*.

At S120, control circuit 150 calculates hysteresis bandwidth BW according to the above Equation (5) and, at S130, control circuit 150 calculates duties D, (1-D) to be used in dead time compensation. The duties can be calculated, for example, using the above Equations (6) and (7) but may be calculated by other methods. As an example, duties D, (1-D) can be calculated from the ratio between bus voltages (E/2, -(E/2)) on positive electrode line 111 and negative electrode line 112 and the system voltages (va to vb) of AC power source 20. For example, in consideration of a voltage produced in current control reactors 141a to 141c during passage of current in accordance with current command values ia* to ic*, duties D, (1-D) can be determined separately such that output voltages (average values in accordance with duty) at intermediate points Na to Nc of first leg 121 to third leg 123 match voltages va to vc. The process at S120 to S130 corresponds to the operation of hysteresis band generation unit 50 in FIG. 7.

At S140, control circuit 150 calculates upper limit Iup and lower limit Ilw of the hysteresis band in the corresponding phase, based on hysteresis bandwidth BW calculated at S120 and current command values ia* to ic*. The process at S140 corresponds to the output operation of BW/2 and -(BW/2) from hysteresis band generation unit 50 and the operation of adders 52, 54.

At S150, control circuit 150 calculates upper limit Iupc and lower limit Ilwc of the hysteresis band after dead time compensation. S150 includes S152, S154, and S156.

At S152, control circuit 150 determines the polarity (positive/negative) of reactor currents ia to ic in the corresponding phases, based on current command values ia* to ic*. When reactor current is positive (if YES at S152), the process proceeds to S154. When reactor current is negative (if NO at S152), the process proceeds to S156.

At S154, as explained in FIG. 8, control circuit 150 keeps the upper limit such that Iupc=Iup and performs dead time compensation to raise the lower limit such that Ilwc=Ilw+Xd (Xd>0). On the other hand, at S156, as explained in FIG. 9, control circuit 150 keeps the lower limit such that Ilwc=Ilw and performs dead time compensation to lower the upper limit such that Iupc=Iup+Xd# (Xd#<0). The process at S150 corresponds to the operation of dead time compensation units 72, 74 in FIG. 7.

Upper limit Iupc and lower limit Ilwc of the hysteresis band set by the control process in FIG. 10 are input to hysteresis comparator 60, whereby a gate signal for a switching element in each leg with dead time Td given is generated such that the detection values (instantaneous values) of reactor currents ia to ic of the corresponding phases undergo hysteresis control in accordance with the hysteresis band after dead time compensation.

In this way, in the power conversion device according to the first embodiment, the positive or negative compensation amount is selectively added to one of the upper limit and the lower limit of the hysteresis band set in accordance with a target value of switching frequency, thereby preventing reactor current from falling outside the hysteresis band during a dead time period. As a result, it is possible to implement hysteresis control using an instantaneous value of the electrical quantity such as current or voltage, for controlling the switching frequency to a target value stably.

Modification of First Embodiment

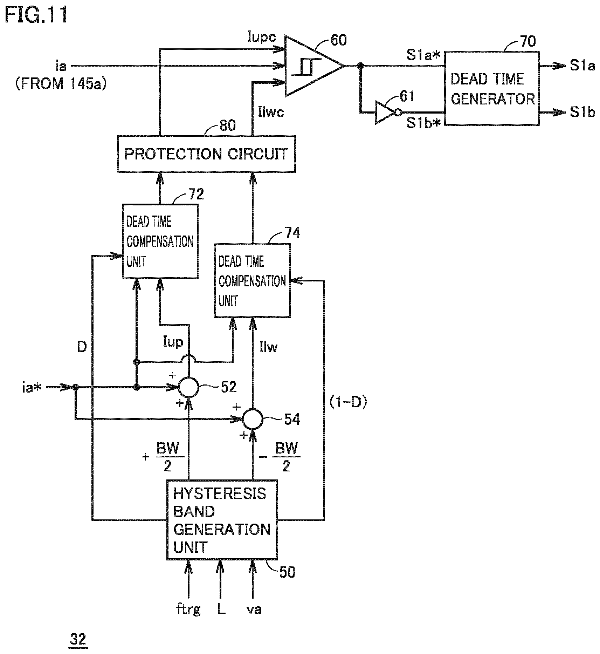

FIG. 11 is a functional block diagram illustrating hysteresis control according to a modification of the first embodiment.

As shown in FIG. 11, a hysteresis control unit 32 according to a modification of the first embodiment differs from hysteresis control unit 31 (FIG. 7) according to the first embodiment in that it further includes a protection circuit 80.

Protection circuit 80 is provided to prevent hysteresis bandwidth BW# (BW#=Iupc-Ilwc) with upper limit Iupc and lower limit Ilwc after processing by dead time compensation units 72, 74 from becoming less than a limiting value BWmin. Limiting value BWmin can be determined in advance such that the switching operation does not become unstable, based on the inclination of reactor current ia dependent on the inductance of current control reactor 141a.

For example, when BW#<BWmin, upper limit Iupc and lower limit Ilwc (after dead time compensation) of the hysteresis band to be input to hysteresis comparator 60 can be corrected such that (BWmin-BW#)/2 is added to upper limit Iupc and (BWmin-BW#)/2 is subtracted from lower limit Ilwc.

Thus, BW#≥BWmin can be ensured for upper limit Iupc and lower limit Ilwc of the hysteresis band. The other configuration in FIG. 11 is similar to hysteresis control unit 31 in FIG. 7 and will not be further elaborated.

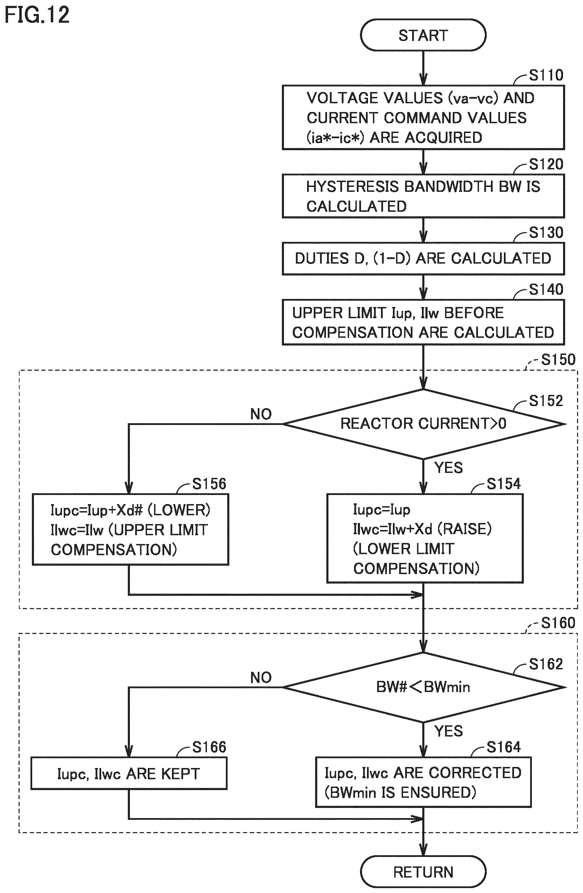

FIG. 12 shows a flowchart illustrating a process of hysteresis control according to a modification of the first embodiment.

As shown in FIG. 12, in a modification of the first embodiment, control circuit 150 performs a process at S160 for protecting the hysteresis bandwidth, after S110 to S150 similar to those in FIG. 10. S160 includes S162, S164, and S166.

At S162, control circuit 150 compares hysteresis bandwidth BW# with upper limit Iupc and lower limit Ilwc after processing by dead time compensation units 72, 74 with a predetermined limiting value BWmin. If BW#<BWmin (if YES at S162), the process proceeds to S164. If BW#≥BWmin (if NO at S162), the process proceeds to S166.

At S164, control circuit 150 corrects upper limit Iupc and lower limit Ilwc of the hysteresis band to be input to hysteresis comparator 60 so that BW#≥BWmin is ensured. For example, upper limit Iupc and lower limit Ilwc can be corrected such that upper limit Iupc is increased and lower limit Ilwc is decreased as described above.

On the other hand, at S166, control circuit 150 inputs upper limit Iupc and lower limit Ilwc after processing by dead time compensation units 72, 74 to hysteresis comparator 60 without correcting them. The process at S160 corresponds to the operation of protection circuit 80 in FIG. 11.

In the power conversion device according to a modification of the first embodiment, the hysteresis width is kept at a certain value or more, whereby the switching operation can be stabilized.

Second Embodiment

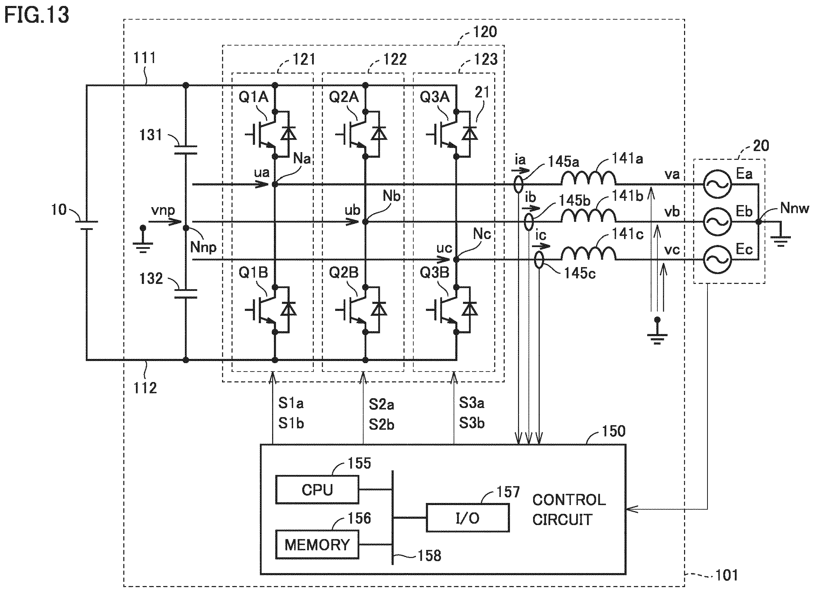

FIG. 13 is a schematic configuration diagram of a power conversion device 101 according to a second embodiment.

Power conversion device 101 shown in FIG. 13 differs from power conversion device 100 according to the first embodiment in that the DC-side neutral point Nnp (that is, the neutral point of DC power source 10) of three-phase inverter circuit 120 is not grounded. The other configuration of power conversion device 101 is similar to power conversion device 100 and will not be further elaborated.

In power conversion device 101, the potential difference between the AC-side neutral point Nnw and the DC-side neutral point Nnp (hereinafter also referred to as neutral point voltage vnp) changes. Thus, a current change of the same amount is superimposed on each of reactor currents ia to ic due to the influence of variations in neutral point voltage vnp. The amount of current variation due to such variations in neutral point voltage influences hysteresis control for reactor current as a control target. Therefore, when the neutral point voltage varies, it is necessary to remove the amount of resulting current variation.

In the example in FIG. 13, the AC-side neutral point Nnw is grounded, whereas the DC-side neutral point Nnp is not grounded, but the variations in neutral point voltage vnp described above is caused by neutral point Nnp described above or neutral point Nnw being not grounded. In the second embodiment, hysteresis control of reactor current for removing the influence of such neutral point voltage variations will be described. In other words, neutral point Nnp of DC power source 10 corresponds to an example of "first neutral point", and neutral point Nnw of AC power source 20 corresponds to an example of "second neutral point".

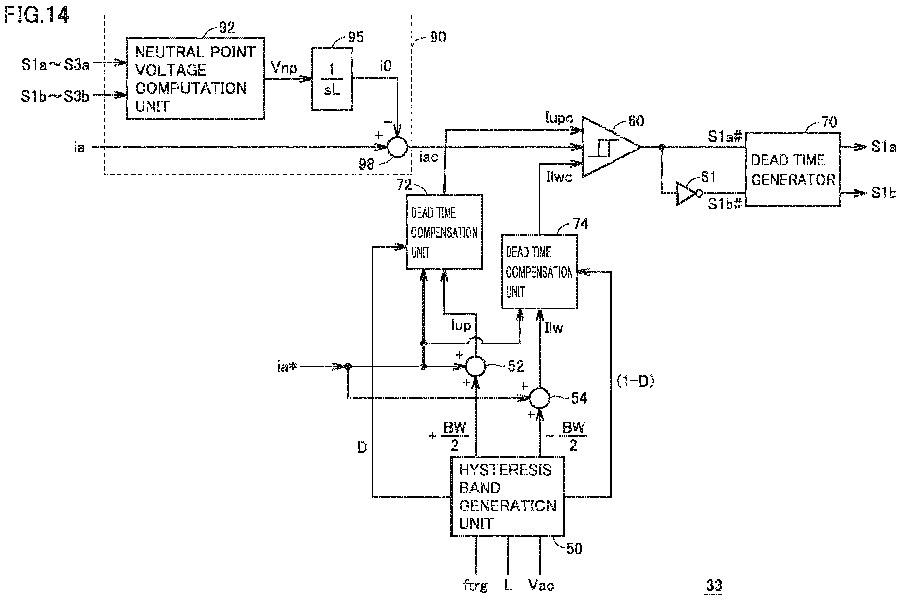

FIG. 14 shows a functional block diagram illustrating hysteresis control according to the second embodiment.

As shown in FIG. 14, hysteresis control unit 33 according to the second embodiment) differs from hysteresis control unit 31 (FIG. 7) according to the first embodiment in that it further includes a current compensation unit 90 for removing a neutral point voltage variation of reactor current ia.

The other configuration of hysteresis control unit 33 is similar to hysteresis control unit 31 and will not be further elaborated. Alternatively, also in hysteresis control unit 33, protection circuit 80 similar to that in FIG. 14 (modification of the first embodiment) may be provided at the stage subsequent to dead time compensation units 72, 74. Therefore, also in hysteresis control unit 33, upper limit Iupc and lower limit Ilwc of the hysteresis band to be input to hysteresis comparator 60 are calculated in the same manner as in the first embodiment and the modification thereof.

Current compensation unit 90 includes a neutral point voltage computation unit 92, a current variation component calculation unit 95, and a subtractor 98. Neutral point voltage computation unit 92 calculates a neutral point voltage Vnp equivalent to a theoretical value of neutral point voltage vnp, from a switching pattern of switching elements Q1A to Q3A, Q1B to Q3B.

As known, neutral point voltage Vnp has a step-like voltage waveform changing in accordance with the switching pattern. In outline, it is known that, in first leg 121 to third leg 123, in a period in which two of the switching elements on the positive electrode side (Q1A to A3A) are turned on, and one of the switching elements on the negative electrode side (Q1B to Q3B) is turned on, Vnp=+(E/6), whereas one of the switching elements on the positive electrode side is turned on and two of the switching elements on the negative electrode side are turned on, Vnp=-(E/6). In a period in which all of three switching elements on the positive electrode side are turned on, Vnp=+(E/2), and in a period in which all of three switching elements on the negative electrode side are turned on, Vnp=-(E/2).

Specifically, neutral point voltage Vnp is determined by a combination of voltages ua to uc which are potentials to ground of intermediate points Na to Nc of first leg 121 to third leg 123. In the following, the theoretical values of voltages ua to uc determined by the switching patterns of the legs are also referred to as leg voltages Ua* to Uc*.

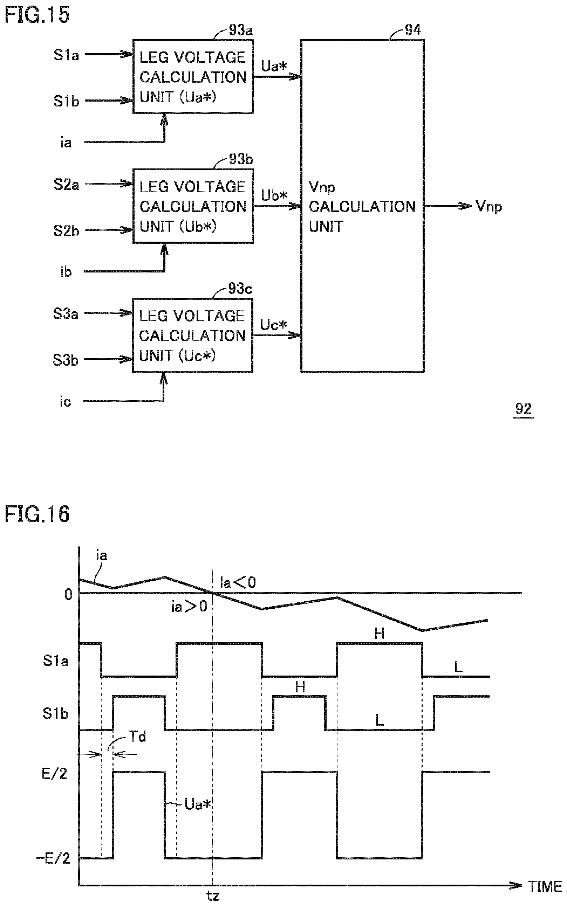

FIG. 15 shows a configuration example of neutral point voltage computation unit 92 shown in FIG. 14.

Neutral point voltage computation unit 92 includes leg voltage calculation units 93a to 93c and a Vnp calculation unit 94.

Leg voltage calculation unit 93a calculates leg voltage Ua* which is a theoretical value of potential to ground of intermediate point Na of first leg 121, using gate signals S1a, S1b of switching elements Q1A, Q1B and reactor current ia.

FIG. 16 shows a conceptual waveform diagram for explaining the operation of leg voltage calculation unit 93a of first leg 121.

As shown in FIG. 16, in a period in which gate signal S1a=H level and gate signal S1b=L level, switching element Q1A on the positive electrode side turns on so that intermediate point Na is electrically connected to positive electrode line 111 and therefore leg voltage Ua*=+(E/2).

On the other hand, in a period in which gate signal S1b=H level and gate signal S1a=L level, switching element Q1B on the negative electrode side turns on so that intermediate point Na is electrically connected to negative electrode line 112 and therefore leg voltage Ua*=-(E/2).

In a dead time period in which both of gate signals S1a and S1b are at L level, anti-parallel diode 21 of switching element Q1A or Q1B is conducting so that intermediate point Na is electrically connected to positive electrode line 111 or negative electrode line 112. Therefore, leg voltage Ua* varies depending on the polarity (positive/negative) of reactor current ia.

Specifically, before time tz in which reactor current ia is positive, in FIG. 13, anti-parallel diode 21 of switching element Q1B is conducting, and therefore leg voltage Ua*=-(E/2) in a dead time period. On the other hand, after time tz in which reactor current ia is negative, in FIG. 13, anti-parallel diode 21 of switching element Q1A is conducting, and therefore leg voltage Ua*=+(E/2) in a dead time period.

In this way, leg voltage calculation unit 93a can calculate leg voltage Ua*, based on gate signals S1a, S1b of switching elements Q1A, Q1B and reactor current ia (polarity).

Referring to FIG. 15 again, leg voltage calculation unit 93b calculates leg voltage Ub* which is potential to ground (theoretical value) of intermediate point Nb of second leg 122, using gate signals S2a, S2b of switching elements Q2A, Q2B and reactor current ib. Similarly, leg voltage calculation unit 93c calculates leg voltage Uc* which is a theoretical value of potential to ground of intermediate point Nc of third leg 123, using gate signals S3a, S3b of switching elements Q3A, Q3B and reactor current ic.

In each of leg voltage calculation units 93b and 93c, in FIG. 16, leg voltage Ub* or Uc* can be obtained instead of leg voltage Ua*, by replacing gate signal S1a by gate signal S2a or S3a, replacing gate signal S1b by gate signal S2b or S3b, and replacing reactor current ia by reactor current ib or ic.

Vpn calculation unit 94 calculates neutral point voltage Vnp, using leg voltages Ua* to Uc* from leg voltage calculation units 93a to 93c. When the DC-side neutral point Nnp is not grounded, a current path via neutral points Nnp and Nnw is not formed, so neutral point voltage Vnp changes stepwise as described above in accordance with a combination of leg voltages Ua* to Uc*. Zero-phase-sequence current is then added to each of reactor currents ia to ic, and the sum of reactor currents ia to ic after addition of zero-phase-sequence current becomes zero.

Therefore, in order to accurately perform hysteresis control, it is necessary to remove a current variation component resulting from variations in neutral point voltage Vnp corresponding to zero-phase-sequence current, from reactor current of the corresponding phase.

Referring to FIG. 14 again, current variation component calculation unit 95 calculates a current variation component i0 resulting from variations in neutral point voltage Vnp, based on neutral point voltage Vnp calculated by neutral point voltage computation unit 92. Subtractor 98 subtracts current variation component i0 calculated by current variation component calculation unit 95 from a detection value of reactor current ia. Thus, subtractor 98 outputs reactor current iac in which the current variation component resulting from variations in neutral point voltage Vnp is canceled. Reactor current iac from subtractor 98 is input to hysteresis comparator 60.

In hysteresis control unit 33 according to the second embodiment, hysteresis comparator 60 compares reactor current iac compensated for by current compensation unit 90 with upper limit Iupc and lower limit Ilwc of the hysteresis band, whereby hysteresis control of reactor current is performed in the same manner as in the first embodiment and the modification thereof.

As illustrated in FIG. 14, current variation component calculation unit 95 can be configured with an integral element having a time constant in accordance with inductance L of current control reactors 141a to 141c. Alternatively, in order to prevent accumulation of DC errors, current variation component calculation unit 95 may calculate current variation component i0 by adding a high-pass filter (preferably second or higher order high-pass filter) having a cut-off frequency sufficiently lower than the switching frequency and inputting an output value of the high-pass filter to the above integral element. Alternatively, current variation component calculation unit 95 may be configured using a first order low-pass filter instead of the above integral element.

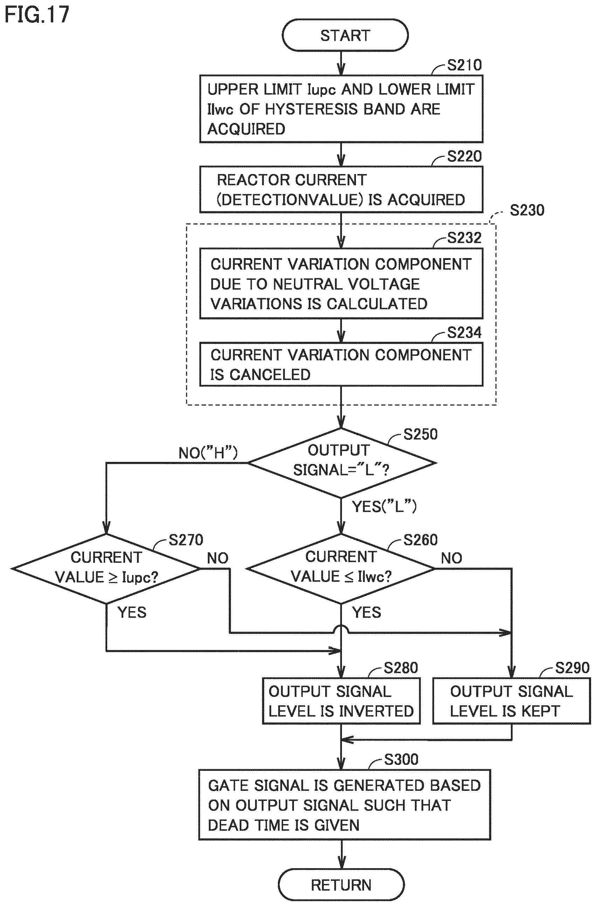

FIG. 17 shows a flowchart illustrating a current comparison process in hysteresis control according to the second embodiment. The control process in FIG. 17 is repeatedly performed periodically by control circuit 150.

At S210, control circuit 150 acquires upper limit Iupc and lower limit Ilwc of the hysteresis band. The process at S210 is implemented by reading a value obtained in the control process shown in FIG. 10 or FIG. 12.

At S220, control circuit 150 acquires a detection value (ia to ic) of reactor current from a sensor output and, at S230, control circuit 150 removes a variation component due to the influence of neutral point potential variations from the detection value of reactor current. S230 includes S232 and S234.

At S232, control circuit 150 calculates a current variation component resulting from variations in neutral point voltage Vnp, and at S234, control circuit 150 cancels the current variation component obtained at S232 from the detection value of reactor current (S220). The process at S232 corresponds to the operation of neutral point voltage computation unit 92 and current variation component calculation unit 95 in FIG. 14, and the process at S234 corresponds to the operation of subtractor 98 in FIG. 14.

At S250 to S290, control circuit 150 performs a process of comparing the reactor current (S234) with upper limit Iupc and lower limit Ilwc (S210). At S250, control circuit 150 branches the process, depending on the level of an output signal indicating the comparison result (corresponding to an output signal of hysteresis comparator 60).

If the output signal is at L level (if YES at S250), at S260, control circuit 150 compares with lower limit Ilwc of the hysteresis band. While the reactor current is higher than lower limit Ilwc (if NO at S260), at S290, the output signal is kept at L level. On the other hand, when the reactor current lowers to lower limit Ilwc (if YES at S260), at S280, the output signal is inverted from L level to H level.

On the other hand, if the output signal is at H level (if NO at S250), at S270, control circuit 150 compares the reactor current with upper limit Iupc. While the reactor current is lower than upper limit Iupc (if NO at S270), at S290, the output signal is kept at H level. On the other hand, when the reactor current rises to upper limit Iupc (if YES at S270), at S280, the output signal is inverted from H level to L level. The process at S250 to S290 corresponds to the operation of hysteresis comparator 60 in FIG. 14.

At S300, control circuit 150 generates a gate signal for each switching element of three-phase inverter circuit 120 so as to give a dead time, based on an output signal of hysteresis comparator 60 obtained at S250 to S290. The process at S300 corresponds to the operation of dead time generator 70.

Through the control process in which S230 is deleted from the flowchart shown in FIG. 17, control circuit 150 can perform the current comparison process of the hysteresis control according to the first embodiment and the modification thereof. In this case, at S250 to S290, the process of comparing a detection value of reactor current (S210) with upper limit Iupc and lower limit Ilwc (S210) is performed. In this case, the process at S250 to S290 corresponds to the operation of hysteresis comparator 60 in each of FIG. 7 and FIG. 11.

In this way, in the power conversion device according to the second embodiment, even in a configuration in which a neutral point potential varies because neutral point Nnw of AC power source 20 or the DC-side neutral point Nnp of three-phase inverter circuit 120 is not grounded, the effect of hysteresis control according to the first embodiment and the modification thereof can be achieved.

As explained above, in the power conversion device according to the present embodiment, a switching element can be turned on/off in accordance with hysteresis bandwidth BW that reflects target value ftrg of switching frequency while the influence of dead time is eliminated, so that the switching frequency can be controlled to target value ftrg stably.

By setting the target value ftrg to a constant value as described in the present embodiment, variations in switching frequency can be suppressed and the operation of the power conversion device can be stabilized. The stabilization of the switching frequency can prevent increase in computational load in the microcomputer or FGPA that constitutes control circuit 150, with increase in switching frequency.

Typically, when switching control that requires fast computation, such as a pulse width modulation (PMW) scheme, is used, introduction of a digital signal processor (DSP) is necessary, so a plurality of control devices may be used to handle both of abnormality monitoring and switching control. By contrast, when the hysteresis control according to the present embodiment is applied instead of the above PWM scheme or the like, continuous monitoring of current by the hysteresis control can be utilized while the characteristics of frequency and the like are maintained with a single control device. Thus, a fast response of control for handling abnormality can be implemented with no need for a special external circuit even at the event of abnormality. Furthermore, the switching frequency becomes constant, whereby design know-how such as electromagnetic compatibility (EMC) measures can be used, and the thermal design of switching elements and reactors becomes easy, thereby contributing to improvement in reliability of the power conversion device.

On the other hand, target value ftrg of switching frequency can be set variably with the elapse of time. For example, the power conversion device may be operated such that the peak of noise level on the frequency spectrum is reduced by changing target value ftrg at regular time intervals. Further, the target value ftrg may be set such that the noise level of a certain frequency is reduced, in cooperation with a device external to the power conversion device.

Alternatively, the control of setting target value ftrg of switching frequency variably depending on a temperature condition of the power conversion device is also possible. For example, since the amount of heat generation of current control reactors 141a to 141c is dependent on the magnitude of a ripple current component of reactor currents ia to ic, that is, the switching frequency of three-phase inverter circuit 120, target value ftrg can be changed based on the comparison of the element temperature of switching elements Q1A to Q3A, Q1B to Q3B with the temperature of current control reactors 141a to 141c.

In the present embodiment, an example in which hysteresis control is applied to a three-phase inverter circuit has been described. However, the hysteresis control according to the present embodiment may be applied to a power conversion device having any configuration that has a plurality of switching elements connected such that a dead time is required. For example, the hysteresis control according to the present embodiment can be applied also to a single-phase inverter circuit having two legs, or a chopper circuit performing DC/DC conversion, or a PWM rectifying circuit performing AC/DC conversion.

Furthermore, in the present embodiment, an example in which reactor currents ia to ic output from three-phase inverter circuit 120 are targets of hysteresis control has been described. However, the hysteresis control according to the present embodiment can be implemented by comparing any electrical quantity (including current, voltage, and power) that is treated in power conversion by a power conversion device including switching elements with the upper limit and the lower limit of the hysteresis band encompassing a command value of the electrical quantity. For example, the electrical quantity treated in power conversion described above as a target of hysteresis control includes the electrical quantity input/output to the power conversion device, such as reactor current and DC link voltage (voltage of DC link capacitors 131 and 132) in the present embodiment, and the electrical quantity detected inside the power conversion device.

Embodiments disclosed here should be understood as being illustrative rather than being limitative in all respects. The technical scope of the present invention is shown not in the foregoing description but in the claims, and it is intended that all modifications that come within the meaning and range of equivalence to the claims are embraced here.

REFERENCE SIGNS LIST

10 DC power source, 20 AC power source, 21 anti-parallel diode, 30a, 30b, 31, 32, 33 hysteresis control unit, 50 hysteresis band generation unit, 52, 54 adder, 60 hysteresis comparator, 61 inverter, 70 dead time generator, 72, 74 dead time compensation unit, 80 protection circuit, 90 current compensation unit, 92 neutral point voltage computation unit, 93a, 93b, 93c leg voltage calculation unit, 94 Vpn calculation unit, 95 current variation component calculation unit, 98 subtractor, 100, 101 power conversion device, 111 positive electrode line, 112 negative electrode line, 120 three-phase inverter circuit, 121 first leg, 122 second leg, 123 third leg, 131, 132 DC link capacitor, 141a to 141c current control reactor, 145a to 145c current sensor, 150 control circuit, 158 bus, BW hysteresis bandwidth, Ea, Ec AC voltage source, Ilw, Ilwc lower limit (hysteresis band), Iup, Iupc upper limit V, L inductance, Nnp neutral point (DC side), Nnw neutral point (AC side), Q1A, Q1B, Q2A, Q2B, Q3A, Q3B switching element, S1b, S1a, S2a, S2b, S3a, S3b gate signal, Td dead time, Tsw switching period, Ttrg target value (switching period), ftrg target value (switching frequency), Vnp, vnp neutral point voltage, ia* current command value, ia to ic reactor current.

**Claims**

1. A power conversion device comprising:

    a power conversion circuit including first and second switching elements connected in series between first and second lines; and
    a control circuit to control on/off of the first and second switching elements by hysteresis control based on a comparison of a detection value of an electrical quantity treated in power conversion by the power conversion circuit with an upper limit and a lower limit of a hysteresis band encompassing a command value of the electrical quantity,
    wherein the on/off of the first and second switching elements is controlled such that a dead time is provided in which both of the first and second switching elements are turned off when the on/off is switched,
    a hysteresis band generation unit to generate a hysteresis bandwidth in the hysteresis control, in accordance with a target value of switching frequency of the first and second switching elements,
    an upper/lower limit setting unit to set the upper limit and the lower limit in accordance with the hysteresis bandwidth and the command value,
    a dead time compensation unit to add, to the upper limit and the lower limit set by the upper/lower limit setting unit, a compensation amount for preventing the detection value from falling outside the hysteresis band during the dead time,
    a hysteresis comparator to compare the detection value with the upper limit and the lower limit after processing by the dead time compensation unit, and
    a dead time generator to generate a control signal for the on/off of the first and second switching elements such that the dead time is given, based on an output signal of the hysteresis comparator,
    wherein the dead time compensation unit performs a process of adding the compensation amount with a different polarity to a different one of the upper limit and the lower limit between when the detection value is positive and when the detection value is negative.

2. The power conversion device according to claim 1, wherein when the detection value is positive, the dead time compensation unit sets a positive compensation amount to raise the lower limit, and when the detection value is negative, the dead time compensation unit sets a negative compensation amount to lower the upper limit.

3. The power conversion device according to claim 1 or 2, wherein the dead time compensation unit changes the compensation amount in accordance with a ratio of an ON period of the first and second switching elements to a switching period of the first and second switching elements.

4. The power conversion device according to any one of claims 1 to 3,
   wherein an absolute value of the compensation amount is set to be proportional to a ratio of a time length of the dead time to an ON period length of the first or second switching element turned on immediately before the dead time.

5. The power conversion device according to any one of claims 1 to 4,
   wherein

   the control circuit further includes
   a protection circuit to prevent a difference between the upper limit and the lower limit after processing by the dead time compensation unit from becoming smaller than a predetermined limiting value, and
   when the difference is smaller than the limiting value, the protection circuit corrects the upper limit and the lower limit to be used in the hysteresis comparator, such that the predetermined limiting value is ensured.

6. The power conversion device according to any one of claims 1 to 5,
   wherein

   the power conversion circuit includes a plurality of legs each constituted with the first and second switching elements and performs power conversion between a DC voltage source and an AC voltage source connected to each of the legs, the DC voltage source having a positive electrode and a negative electrode connected to the first and second lines,
   the power conversion device further comprises a reactor connected between a connection point between the first and second switching elements of each of the legs, and the AC voltage source, and
   the detection value is a detection value of current passing through the reactor.

7. The power conversion device according to claim 6, wherein

   at least one of a first neutral point of the DC voltage source and a second neutral point of the AC voltage source is not grounded,
   the control circuit further includes
   a current compensation unit to cancel a variation component of the detection value of current due to change of a neutral point voltage that is a potential difference between the first and second neutral points, and
   the hysteresis comparator compares the detection value of current from which the variation component has been removed by the current compensation unit, with the upper limit and the lower limit after processing by the dead time compensation unit.

8. A method of controlling a power conversion device including a power conversion circuit having first and second switching elements connected in series between first and second lines, in which on/off of the first and second switching elements is controlled such that a dead time is provided in which both of the first and second switching elements are turned off when the on/off is switched,

   the method comprising a step of controlling the on/off of the first and second switching elements by hysteresis control based on a comparison of a detection value of an electrical quantity treated in power conversion by the power conversion circuit with an upper limit and a lower limit of a hysteresis band encompassing a command value of the electrical quantity,
   the step of controlling including steps of:

   generating a hysteresis bandwidth in the hysteresis control, in accordance with a target value of switching frequency of the first and second switching elements;
   setting the upper limit and the lower limit in accordance with the hysteresis bandwidth and the command value;
   performing dead time compensation of adding, to the set upper limit and lower limit, a compensation amount for preventing the detection value from falling outside the hysteresis band during the dead time;
operating a hysteresis comparator such that the detection value is compared with the upper limit and the lower limit after the dead time compensation; and
generating a control signal for the on/off of the first and second switching elements such that the dead time is given, based on an output signal of the hysteresis comparator,
wherein in the dead time compensation, the compensation amount with a different polarity is added to a different one of the upper limit and the lower limit between when the detection value is positive and when the detection value is negative.

9. The method of controlling a power conversion device according to claim 8, further comprising a step of preventing a difference between the upper limit and the lower limit after the dead time compensation from becoming smaller than a predetermined limiting value,
wherein in the step of preventing, when the difference is smaller than the limiting value, the upper limit and the lower limit to be used in the hysteresis comparator are corrected such that the limiting value is ensured.

10. The method of controlling a power conversion device according to claim 8 or 9, wherein

the power conversion circuit includes a plurality of legs each constituted with the first and second switching elements and performs power conversion between a DC voltage source and an AC voltage source connected to each of the legs, the DC voltage source having a positive electrode and a negative electrode connected to the first and second lines,
the power conversion device further includes a reactor connected between a connection point between the first and second switching elements of each of the legs, and the AC voltage source, and
the detection value is a detection value of current passing through the reactor.

11. The method of controlling a power conversion device according to claim 10, wherein

at least one of a first neutral point of the DC voltage source and a second neutral point of the AC voltage source is not grounded,
the step of controlling further includes a step of canceling a variation component of the detection value of current due to change of a neutral point voltage that is a potential difference between the first and second neutral points, and
the hysteresis comparator compares the detection value of current from which the variation component has been removed by the step of canceling, with the upper limit and the lower limit after the dead time compensation.

FIG.1

FIG.2

FIG.3

FIG.4

FIG.5

## FIG.6

$Xd:Td=BW:(1-D)\cdot Tsw$

FIG.7

31

**FIG.8**

**FIG.9**

FIG.10

START

S110
VOLTAGE VALUES (va-vc) AND
CURRENT COMMAND VALUES
(ia*-ic*) ARE ACQUIRED

S120
HYSTERESIS BANDWIDTH BW IS
CALCULATED

S130
DUTIES D, (1-D) ARE CALCULATED

S140
UPPER LIMIT Iup, Ilw BEFORE
COMPENSATION ARE CALCULATED

S150

S152
REACTOR CURRENT>0

NO

YES

S156
Iupc=Iup+Xd# (LOWER)
Ilwc=Ilw (UPPER LIMIT
COMPENSATION)

S154
Iupc=Iup
Ilwc=Ilw+Xd (RAISE)
(LOWER LIMIT
COMPENSATION)

RETURN

23

FIG.11

# FIG.12

START

S110
VOLTAGE VALUES (va-vc) AND CURRENT COMMAND VALUES (ia*-ic*) ARE ACQUIRED

S120
HYSTERESIS BANDWIDTH BW IS CALCULATED

S130
DUTIES D, (1-D) ARE CALCULATED

S140
UPPER LIMIT Iup, Ilw BEFORE COMPENSATION ARE CALCULATED

S150

S152
REACTOR CURRENT>0

NO

YES

S156
Iupc=Iup+Xd# (LOWER)
Ilwc=Ilw (UPPER LIMIT COMPENSATION)

S154
Iupc=Iup
Ilwc=Ilw+Xd (RAISE)
(LOWER LIMIT COMPENSATION)

S160

S162
BW#<BWmin

NO

YES

S166
Iupc, Ilwc ARE KEPT

S164
Iupc, Ilwc ARE CORRECTED
(BWmin IS ENSURED)

RETURN

# FIG.13

FIG.14

EP 4 329 179 A1

FIG.15

FIG.16

# EP 4 329 179 A1

## FIG.17

START

S210 — UPPER LIMIT Iupc AND LOWER LIMIT Ilwc OF HYSTERESIS BAND ARE ACQUIRED

S220 — REACTOR CURRENT (DETECTIONVALUE) IS ACQUIRED

S230
S232 — CURRENT VARIATION COMPONENT DUE TO NEUTRAL VOLTAGE VARIATIONS IS CALCULATED

S234 — CURRENT VARIATION COMPONENT IS CANCELED

S250 — OUTPUT SIGNAL="L"?

NO("H")

YES("L")

S270 — CURRENT VALUE ≥ Iupc?

S260 — CURRENT VALUE ≤ Ilwc?

NO

YES

NO

YES

S280 — OUTPUT SIGNAL LEVEL IS INVERTED

S290 — OUTPUT SIGNAL LEVEL IS KEPT

S300 — GATE SIGNAL IS GENERATED BASED ON OUTPUT SIGNAL SUCH THAT DEAD TIME IS GIVEN

RETURN

29

## INTERNATIONAL SEARCH REPORT

International application No.
PCT/JP2021/016443

A. CLASSIFICATION OF SUBJECT MATTER
H02M 7/48(2007.01)i; H02M 7/537(2006.01)i
FI: H02M7/48 F; H02M7/537 C
According to International Patent Classification (IPC) or to both national classification and IPC

B. FIELDS SEARCHED
Minimum documentation searched (classification system followed by classification symbols)
H02M7/48; H02M7/537

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-88266 A (OMRON CORP) 15 April 2010 (2010-04-15) paragraphs [0025]-[0034], fig. 1-2 | 1-11 |
| A | JP 10-225142 A (FUJI ELECTRIC CO LTD) 21 August 1998 (1998-08-21) paragraphs [0017]-[0039], fig. 1 | 1-11 |
| A | JP 9-47064 A (MATSUSHITA ELECTRIC WORKS LTD) 14 February 1997 (1997-02-14) paragraphs [0008]-[0018], fig. 1-2 | 1-11 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 June 2021 (22.06.2021) | 29 June 2021 (29.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.

PCT/JP2021/016443

| Patent Documents referred in the Report | Publication Date | Patent Family | Publication Date |
|---|---|---|---|
| JP 2010-88266 A | 15 Apr. 2010 | (Family: none) | |
| JP 10-225142 A | 21 Aug. 1998 | (Family: none) | |
| JP 9-47064 A | 14 Feb. 1997 | (Family: none) | |

Form PCT/ISA/210 (patent family annex) (January 2015)

**EP 4 329 179 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005341712 A